Europäisches Patentamt

European Patent Office

Office européen des brevets

(11) Veröffentlichungsnummer: **0 443 384 A2**

# EUROPÄISCHE PATENTANMELDUNG

(21) Anmeldenummer: 91101750.7

(22) Anmeldetag: 08.02.91

(51) Int. Cl.⁵: **G05B 9/03**, G05D 13/62

(30) Priorität: 22.02.90 DE 4005546

(43) Veröffentlichungstag der Anmeldung:
28.08.91 Patentblatt 91/35

(84) Benannte Vertragsstaaten:
CH DE FR GB IT LI SE

(71) Anmelder: MAN Gutehoffnungshütte

Aktiengesellschaft
Bahnhofstrasse 66 Postfach 11 02 40
W-4200 Oberhausen 11(DE)

(72) Erfinder: **Blotenberg, Wilfried, Dr.-Ing.**
**Irkensbusch 28**
**W-4220 Dinslaken(DE)**

(54) Verfahren zur redundanten Drehzahlregelung und Vorrichtung zur Durchführung dieses
Verfahrens.

(57) Bei einem Verfahren zur redundanten Regelung von Drehzahlen od. dgl. insbesondere für dampf-, luft- oder gasdurchströmte Strömungsmaschinen wie Dampfturbinen, Gasturbinen, Turbokompressoren od. dgl. mit mindestens drei parallel arbeitenden Steuer- und Regelkreisen, wobei die einzelnen Regelkreise unabhängig voneinander arbeiten und die einzelnen Stellgrößen einer Vergleicherschaltung zwecks Erkennung einer signifikanten Abweichung einer Stellgröße von den anderen Stellgrößen (Ausfall eines Regelkreises) zugeführt werden und wobei die Vergleicherschaltung dann diese falsche Stellgröße unterdrückt und mindestens eine der weiteren Stellgrößen zugrundelegt, wird eine hohe Zuverlässigkeit bei einfachem Aufbau und günstigen Kosten dadurch erreicht, daß neben zwei für sich bekannten (realen) Regelkreisen (7, 7') ein dritter Regelkreis (7'') vorhanden ist, der mittels eines Digitalrechners (15) simuliert wird. Zweckmäßigerweise übernimmt der Digitalrechner (15) gleichzeitig auch die Auswahlfunktion der Vergleicherschaltung (14).

Die Erfindung betrifft ein Verfahren zur redundanten Regelung von Drehzahlen od. dgl., insbesondere für dampf-, luft- oder gasdurchströmte Strömungsmaschinen, wie Dampfturbinen, Gasturbinen, Turbokompressoren od. dgl., mit mindestens drei parallel arbeitenden Steuer- und Regelkreisen, wobei die einzelnen Regelkreise unabhängig voneinander arbeiten und die einzelnen Stellgrößen einer Vergleicherschaltung zwecks Erkennung einer signifikanten Abweichung einer Stellgröße von den anderen Stellgrößen (Ausfall eines Regelkreises) zugeführt werden und wobei die Vergleicherschaltung dann diese falsche Stellgröße unterdrückt und mindestens eine der weiteren Stellgrößen der Steuerung zugrundelegt sowie eine Vorrichtung zur Durchführung dieses Verfahrens.

Bei Steuer- und Regelsystemen für kritische Prozesse und Anlagen wird häufig die Forderung nach einem redundanten System gestellt. Dies bedeutet, daß das Steuer- und Regelsystem mehrfach ausgeführt wird und ein Ausfall eines Systems keinen Einfluß auf den Betrieb der Anlage hat, da die Steuer- und Regelfunktion von einem parallelen System übernommen wird.

Bei einem System mit nur zwei Regelkreisen ist es schwierig, herauszufinden, wann ein Regelkreis ausgefallen ist und welcher Regelkreis ausgefallen ist. Es gibt zwar eine Reihe von Fehlern, die eindeutig auf den Ausfall eines Systems hindeuten, z. B., wenn ein Wert den während des Normalbetriebs maximal oder minimal zulässigen Betriebswert über- bzw. unterschreitet. Diese Fehler decken jedoch längst nicht alle Ausfälle ab. Eine eindeutige Aussage ist nur möglich, wenn drei Werte miteinander verglichen werden. Erst dann ist eindeutig feststellbar, welcher von diesen drei Werten von den beiden anderen abweicht und demzufolge auf einen Systemausfall hindeutet. Eine eindeutige und hinlänglich bekannte Lösung besteht darin, einen dritten Drehzahlregelkreis, bestehend aus den gleichen Komponenten wie der erste und der zweite Regelkreis, hinzuzufügen.

Es ist ein System bekannt, Zwei-Von-Drei-Auswahl genannt, bei dem drei identische Steuer- und Regelkreise im Einsatz sind, deren Ausgänge von einer Auswertesteuerung überwacht und miteinander verglichen werden. Weicht eine Steuergröße von den beiden anderen ab, wird diese abweichende Steuergröße unterdrückt und die Anlage mit den beiden anderen Steuergrößen weitergefahren. Es erfolgt eine Alarmierung mit der Aufforderung, den defekten Kanal zu reparieren. Häufig ist es möglich, diese Reparatur durchzuführen, ohne daß der Betrieb der Anlage gestört wird.

Auf diese Weise läßt sich die Zuverlässigkeit einer Anlage und dadurch die Verfügbarkeit eines Prozesses stark erhöhen. Dazu ist es jedoch notwendig, daß statt eines Steuer- und Regelkreises drei Kreise vorhanden sein müssen. Dies hat eine Verdreifachung der Kosten zur Folge. Zum Vergleich der drei Steuergrößen ist zusätzlich eine Vergleicherschaltung erforderlich, welche zusätzliche Fehler erzeugen und zu ungewollten Anlagenausfällen führen kann. Dies ist insbesondere dadurch bedingt, daß diese Vergleicherschaltung häufig nur einfach vorhanden ist und damit das schwächste Glied in der ganzen Redundanzkette darstellt.

Bei Steuerungen, in denen die Steuergrößen nur zwei Zustände (ein oder aus, auf oder zu, ja oder nein) annehmen können, ist eine Zwei-Von-Drei-Auswahl noch verhältnismäßig einfach realisierbar. Es kann durch einfache Logikverknüpfung sehr leicht und zuverlässig entschieden werden, ob eine Größe von den anderen abweicht oder nicht. Kritischer ist es, wenn kontinuierlich veränderbare Steuergrößen zu überwachen sind. Dies ist dann der Fall, wenn Regelkreise redundant aufzubauen sind. Die Steuergrößen können beliebige Werte annehmen, sie können nur sehr geringfügig voneinander abweichen oder auch in größerem Maße. Eine weitere. Abweichung kann auch durch unterschiedliches Zeitverhalten der Regler - während eines transienten Vorgangs beispielsweise auch nur vorübergehend - erfolgen. Hierbei ist es schwierig, die richtige Steuergröße zu ermitteln. Wird der Mittelwert aus verschiedenen Größen gebildet, ist hierzu bereits ein recht aufwendiges System zur Mittelwertbildung erforderlich. Dieses System birgt dann aber auch ein entsprechend hohes Ausfallrisiko, welches jedoch durch die Redundanz gerade verringert werden soll.

Ein solches redundantes System muß also sehr sorgfältig geplant werden, da sonst die resultierende Verfügbarkeit unter Umständen geringer ausfällt als die eines einfach und zuverlässig aufgebauten einfachen Regelkreises. Die Realiesierung einer Auswahlschaltung für kontinuierlich veränderbare Steuerbefehle stellt sich insbesondere dann schwierig dar, wenn die Redundanz sich nicht nur auf die Verdoppelung oder Verdreifachung von elektronischen Kreisen erstreckt, sonderen zusätzlich hydraulische, pneumatische oder mechanische Glieder mit einschließt.

Die vorliegende Erfindung befaßt sich mit der Verbesserung eines redundanten Steuer- und Regelsystems im allgemeinen; das erfindungsgemäße Prinzip soll an einem Drehzahlregelkreis für eine Dampfturbine erklärt werden, ist jedoch auch auf alle anderen Regel- und Steuerkreise an dampf-, luft- und gasdurchströmten Strömungsmaschinen anwendbar.

Eine bekannte Dampfturbinendrehzahlregelung besteht aus einem Drehzahlfühler zur Erfassung des Drehzahlistwertes, einem Drehzahlregler, der diesen Istwert mit einem vorgegebenen Sollwert vergleicht und bei einer Abweichung seine Stellgröße verändert. Diesem Drehzahlregler ist häufig ein Stellungsregelkreis nachgeschaltet, der die Position des Dampfregelventils auf eine Position einregelt, die von der Stellgröße des Drehzahlreglers vorgegeben wird. In diesem Stellungsregler wird der Stellungssollwert mit der der gemessenen Iststellung des Dampfregelventils verglichen und bei einer Abweichung wird die Stellgröße verändert.

Einem ersten Regelkreis, bestehend aus einem Drehzahlfühler, einem Drehzahlsollwertsteller, einem Drehzahlregler, einem Stellungsregler, einem Stellungsistwertfühler, einem Wandler, einem Stellantrieb, einem Dampfregelventil und einer Turbine, wird ein zweiter Regelkreis parallel geschaltet, der aus genau den gleichen Komponenten besteht. In der Regel ist jedoch aus konstruktiven Gründen der Einsatz von zwei Dampfregelventilen nicht sinnvoll, so daß diese nur jeweils einfach vorhanden sind. Die Ansteuerung des Dampfregelventils erfolgt entweder durch die Stellgröße des ersten Regelkreises oder die des zweiten Regelkreises. Ein Steuerelement bewirkt bei Ausfall eines Regelkreises innerhalb weniger Millisekunden die Umschaltung von einem Regelkreis auf den andern.

Der vorliegenden Erfindung liegt daher die Aufgabe zugrunde, ein redundantes Steuer- und Regelsystem mit den Merkmalen des Oberbegriffs von Anspruch 1 insgesamt zu verbessern und insbesondere so auszugestalten und weiterzubilden, daß bei günstigen Kosten ein einfacher Aufbau und eine hohe Zuverlässigkeit erreicht werden. Gelöst wird diese Aufgabe dadurch, daß neben zwei für sich bekannten Regelkreisen ein dritter Regelkreis vorhanden ist, welcher mittels eines Simulationsrechners simuliert wird. Dazu erhält der Simulationsrechner alle Eingangssignale, so wie sie auch die beiden anderen Kreise erhalten. Insbesondere sind dies der Drehzahlistwert, der Drehzahlsollwert und die Stellung des Dampfregelventils sowie ein Eingangssignal aus der Hydraulik bzw. Pneumatik, wie insbesondere der Austrittsdruck der elektrohydraulischen bzw. elektropneumatischen Wandler.

Wird als Simulationsrechner ein ausreichend schneller Digitalrechner verwendet, kann die Simulation des dritten Regelkreises in Echtzeit erfolgen.

Nach einer weiteren Lehre der Erfindung ist es besonders zweckmäßig, wenn der Digitalrechner gleichzeitig auch die Auswahlfunktion der Vergleicherschaltung übernimmt. Auf diese Weise ist es möglich, gegenüber der herkömmlichen Lösung mit drei unabhängigen Regelkreisen erhebliche Kosten einzusparen. Im Digitalrechner wird das gesamte dynamische Verhalten des Drehzahlregelkreises in Echtzeit simuliert, so daß bei intakten Reglern der erste, der zweite und der dritte (simulierte) Regelkreis stets die gleichen Werte zeigen. Durch einen Vergleich der einzelnen Stellgrößen, bei Bedarf auch durch Überwachung zusätzlicher Zwischengrößen, kann nun der Digitalrechner stets nachprüfen, ob eines der Systeme ausgefallen ist. Ist z. B. eine Komponente des ersten Drehzahlregelkreises ausgefallen, wird sich eine signifikante Abweichung zu den Werten des zweiten und dritten Kreises zeigen und die Vergleicherschaltung im Digitalrechner kann auf den zweiten Kreis umschalten. Ist der zweite Kreis bereits aktiv, erfolgt keine Änderung.

Es ist von besonderem Vorteil, daß jede Abweichung gemeldet wird, um dem Betriebspersonal eine Warnung zu geben und es zu veranlassen, den ausgefallenen Kreis zu reparieren. In weiterer Ausgestaltung der Erfindung steuert die Vergleicherschaltung mittels eines Steuerbefehls das Steuerelement direkt an, so daß das Steuermedium der nicht unterdrückten Stellgröße dem die Drehzahl beeinflussenden Stellantrieb zugeführt wird. Da der unterdrückte Kreis in seiner Wirkung auf die Stömungsmaschine vollkommen inaktiv ist - es werden lediglich Eingangsgrößen in die Vergleicherschaltung eingespeist - kann eine Reparatur ohne Beeinträchtigung des Betriebes sogar bei laufender Strömungsmaschine erfolgen.

In vielen Anwendungsfällen ist es möglich, daß als Drehzahlsollwert die Stellgröße eines vorgelagerten Regelkreises, z. B. eines Turbinengegendruckreglers, eines Leistungsreglers oder eines Druck- oder Durchflußreglers eines Kompressors, falls die Dampfturbine einen Kompressor antreibt, benutzt wird. In den genannten Fällen ist es erfindungsgemäß ebenfalls möglich, auch diese vorgeschalteten Regler doppelt auszuführen und jeweils einen dritten Regler in einem Digitalrechner zu simulieren.

Es ist jedoch auch denkbar, daß die Drehzahlsollwertbildung in jedem Regelkreis mittels eines Sollwertpotentiometers oder eines sonstigen Sollwertspeichers erfolgt. Bei einer solchen Ausgestaltung kann es geschehen, daß die Sollwerte in den verschiedenen Reglern nicht immer vollständig übereinstimmen, beispielweise, wenn die Potentiometer Fertigungstreuungen aufweisen. Eine solche Abweichung würde dazu führen, daß bei Beschaltung der Drehzahlregler als Proportionalregler die Stellgrößen eine entsprechende bleibende Abweichung voneinander zeigen würden. Werden Drehzahlregler mit Integralwirkung verwendet, beispielsweise PI (Proportional Integral)- oder PID (Proportional Integral Differential)-Regler, führt eine auch noch so geringe Abweichung zwischen Sollwert und Istwert dazu, daß die Stellgröße des Reglers in eine Extremlage läuft, und zwar auf 100 %, wenn der Sollwert des inaktiven Reglers größer als der des aktiven Reglers und in Richtung 0 %, wenn es umgekehrt ist. Je kleiner die Differenz ist, um so länger dauert es, bis die Endlage erreicht wird, doch sie wird erreicht. Um dies zu verhindern, erfolgt nach einer weiteren Lehre der Erfindung bei geringfügigen Abweichungen der einzelnen Sollwerte eine Nachführung des bzw. der inaktiven Regelkreise/s. Nachgeführt wird sowohl der Sollwert des inaktiven realen Reglers als auch des im Simulationsrechner simulierten Reglers. Die Nachführung sorgt also dafür, daß der Sollwert des inaktiven Reglers so verstellt wird, daß seine Stellgröße identisch ist mit der des aktiven Reglers.

Es ist zweckmäßig, daß zur Nachführung die Stellgrößen der Drehzahlregler verwendet werden und die Stellgrößen der Stellungsregler als Auswahl- und Umschaltkriterium für das Steuerelement dienen, denn es ist grundsätzlich sinnvoll, einen Regelkreisausfall erst dann zu melden, wenn die verglichenen Stellgrößen einen Mindestwert voneinander abweichen Dies erlaubt es, daß die Nachführschaltung greift, noch bevor die Auswahlüberwachung angesprochen hat.

Eine weitere mögliche Fehlerquelle für ungewollte Systemausfallmeldungen liegt in den in Regelkreisen häufig verwendeten Wandlerelementen, wie elektrohydraulische bzw. elektropneumatische Wandler, Druckmeßumformer od. dgl.. Diese Wandlerelemente können eine Langzeitdrift aufweisen, welche im Extremfall zu einer Systemausfallmeldung führen kann, obwohl nur eine Dejustage vorliegt. In diesem Fall bietet es sich an, die beiden ausgesteuerten Steuermediumdrücke des ersten und des zweiten Regelkreises miteinander zu vergleichen. Sollte sich bei abgeglichenem Regelkreis eine Abweichung der gemessenen Öldrucke zeigen, die jedoch unterhalb der Ansprechschwelle für eine Ausfallmeldung liegt, kann eine separate Alarmmeldung gegeben werden, die zur Überprüfung der Justierung der entsprechenden Wandlerelemente auffordert. Da die Drift ein langsamer Vorgang ist, ist zu erwarten, daß diese Meldung vor der Ausfallmeldung erscheint. Eine plötzlich auftretende Drift ist nicht normal, so daß auch dies als Systemausfall eines Kreises gemeldet werden sollte.

Gegenstand der Erfindung ist auch eine Vorrichtung zur Durchführung des zuvor beschriebenen Verfahrens, wobei jeder Regelkreis mindestens aus einem Drehzahlistwertfühler, einem Drehzahlsollwertsteller, einem Drehzahlregler, einem Stellungsregler, vorzugsweise nur einem Stellungsistwertfühler und einem ein Regelventil zur Regelung des Volumenstromes des der Strömungsmaschine zugeführten Arbeitsmediums angesteuerten Stellwertgeber besteht und die Vorrichtung erfindungsgemäß dadurch gekennzeichnet ist, daß zur Simulation des vorzugsweise dritten Regelkreises ein Simulationsrechner vorgesehen ist.

Die vorgenannten sowie die beanspruchten und im Ausführungsbeispiel beschriebenen, erfindungsgemäß zu verwendenden Verfahrensschritte bzw. Bauteile unterliegen in ihrer Anwendungsart bzw. Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können; insbesondere sind sie auch unabhängig voneinander zur Lösung der Aufgabe oder zumindest einer Teilaufgabe vorteilhaft verwendbar.

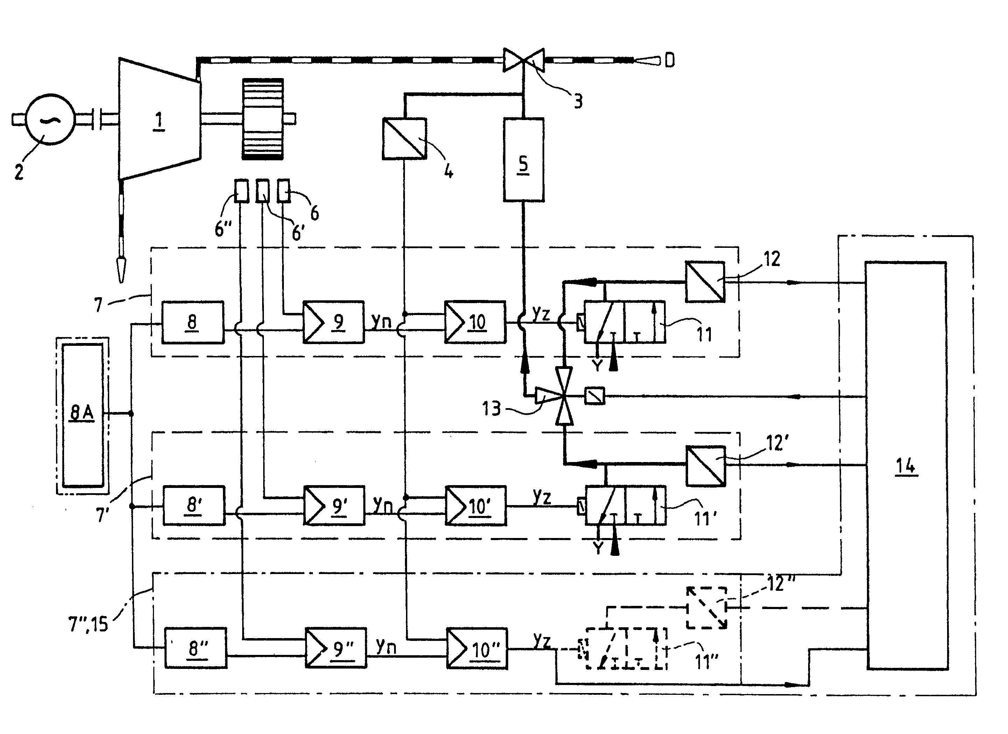

Im folgenden wird nun die Erfindung anhand einer lediglich ein Ausführungsbeispiel darstellenden Zeichnung, insbesondere auch in bezug auf die erfindungsgemäße Vorrichtung, näher erläutert; die einzige Figur zeigt ein Ausführungsbeispiel einer erfindungsgemäßen Vorrichtung zur Durchführung des erfindungsgemäßen Verfahrens als Schaltungsanordnung.

In der einzigen Figur ist das erfindungsgemäße Prinzip für einen Drehzahlregelkreis für eine Dampfturbine in einem Blockschaltbild dargestellt, Wie bereits erwähnt, kann das erfindungsgemäße Prinzip aber genauso auf beispielsweise Pumpgrenzregelungen von Turbokompressoren angewendet werden. In diesem Fall ist einem Pumpgrenzregler, der seinen Sollwert aus einem gemessenen Kompressorenddruck anhand eines Funktionsgebers errechnet und diese mit einem gemessenen Istdurchfluß vergleicht, ein Stellungsregelkreis an einem Abblaseventil oder Umblaseventil nachgeschaltet. Auch hier können zwei Pumpgrenzregler und zwei Stellungsregler parallel installiert sein und die ausgesteuerten Öldrücke bzw. pneumatischen Drücke über ein Magnetventil auf den Stellantrieb des Abblase- oder Umblaseventils gesteuert werden. Erfindungsgemäß läßt sich auch hier der dritte Kreis in einem Digitalrechner simulieren. Der Unterschied besteht hier nur darin, daß die Nachführschaltung nicht den Sollwert direkt verstellen kann, sondern diesen durch eine Verschiebung der Abblaselinie im Funktionsgeber beeinflussen muß.

Die einzige Figur zeigt eine Turbine 1, welche einen nur angedeuteten Generator 2 antreibt. Als Arbeitsmedium wird der Turbine 1 Dampf D zugeführt; die zugeführte Dampfmenge - und damit die Drehzahl der Turbine 1 - läßt sich durch ein Dampfregelventil 3 verändern. Im bevorzugten Ausführungsbeispiel wird die Stellung des Dampfregelventils 3 von einem Stellungsistwertfühler 4 überwacht. Ein Stellantrieb 5 ermöglicht eine Verstellung des Dampfregelventils 3.

Die Drehzahl der Turbine 1 wird im dargestellten Ausführungsbeispiel von drei separaten Drehzahlistwertfühlern 6, 6', 6" gemessen. Diese gehören jeweils zu einem Regelkreis 7, 7', 7". Jeder Regelkreis 7, 7', 7" weist dabei zunächst einen Drehzahlsollwertsteller 8, 8', 8", einen Drehzahlregler 9, 9' , 9", einen Stellungsregler 10, 10' , 10" und einen elektrohydraulischen Wandler 11, 11', 11" sowie einen Druckmeßumformer 12, 12', 12", auf.

Der an der Turbine 1 abgegriffene Drehzahlistwert wird nun in jedem Regelkreis 7, 7', 7" vom Drehzahlregler 9, 9', 9" mit einem vorgegebenen Sollwert verglichen. Bei einer Abweichung ändert der Drehzahlregler 9, 9', 9" seine Stellgröße yn. Der nachgeschaltete Stellungsregelkreis regelt die Position des Dampfregelventils 3 auf eine Position ein, die von der Stellgröße yn des Drehzahlreglers vorgegeben wird. Dazu wird der Stellungssollwert vom Stellungsregler 10, 10', 10" mit der gemessenen Iststellung des Dampfregelventils 3 verglichen und bei einer Abweichung wird die Stellgröße yz verändert. Kommt ein elektronischer Stellungsregelkreis zusammen mit einem hydraulischen Regelventil zum Einsatz, wie im dargestellten Ausführungsbeispiel beschrieben, ist dem Stellungsregler 10, 10', 10" ein elektrohydraulischer Wandler 11, 11', 11" nachgeschaltet, welcher die elektrische Stellgröße yz in einen Flüssigkeitsdruck umwandelt. Entsprechend erfolgt bei pneumatischen Stellungsregelkreisen eine Umwandlung der elektrischen Stellgröße yz mittels elektropneumatischem Wandler in einen Luftdruck. Bei hydraulischen oder pneumatischen Stellungsregelkreisen ist dem Drehzahlregler ein elektro-hydraulischer oder elektropneumatischer Wandler nachgeschaltet und der Stellungsregelkreis rein hydraulisch oder rein pneumatisch nachgebildet. Auf die Funktion der nachfolgend beschriebenen Redundanz hat die Art des Arbeitsmediums aber keinen Einfluß.

Im dargestellten Ausführungsbeispiel, welches von einem elektronischen Stellungsregler 10, 10', 10" und einem hydraulischen Dampfregelventil 3 ausgeht, befindet sich jeder elektrohydraulische Wandler 11, 11', 11" hinter dem entsprechenden Stellungsregler 10, 10', 10". Die Ausgangsdrücke der beiden elektrohydraulischen Wandler 11 und 11' sind auf die beiden Eingänge eines als Magnetventil 13 ausgeführten Steuerelementes geschaltet. Zusätzlich befindet sich an jedem Wandlerausgang ein elektronischer Druckmeßumformer 12, 12', 12", welcher den ausgesteuerten Regelflüssigkeitsdruck mißt und als elektronisches Signal einer Vergleicherschaltung 14 meldet. Der dritte Regelkreis 7" wird erfindungsgemäß in einem Digitalrechner 15 simuliert. Bei einer Abweichung eines der beiden in den Druckmessumformern 12 bzw. 12' gemessenen Drücke von dem im Digitalrechner 15 simulierten Regelflüssigkeitsdruck wird ein Regelkreisausfall gemeldet. Bei einem solchen Regelkreisausfall erfolgt von der Vergleicherschaltung 14 ein Steuerimpuls an das Magnetventil 13, welches innerhalb weniger Millisekunden von einem Regelkreis 7 bzw. 7' auf den anderen 7' bzw. 7 umgeschaltet wird. Je nach Stellung des Magnetventils wirkt also die Stellgröße des ersten Regelkreises 7 oder die des zweiten Regelkreises 7' auf das Dampfregelventil 3.

In weiterer Ausgestaltung der Erfingung ist es zweckmäßig, daß nur eine einzige Vergleicherschaltung 14 vorgesehen ist, welche insbesondere ebenfalls im Digitalrechner 15 gespeichert ist.

Das im Ausführungsbeispiel als 3/2-Wege-Magnetventil 13 ausgeführte Steuerelement kann jedoch - genau wie die Vergleicherschaltung 14 - zur Erhöhung der Zuverlässigkeit auch mehrfach vorhanden sein.

Zur besseren Übersicht sind in der einzigen Figur die beiden realen Regelkreise 7 und 7' mit einer gestrichelten Linie und der simulierte dritte Regelkreis 7" mit einer strichpunktierten Linie zusammengefaßt. Es versteht sich, daß die vom (simulierten) Stellungsregler vermittelte elektrische Stellgröße yz ohne Umwandlung in eine hydraulische oder pneumatische Größe direkt der Vergleicherschaltung 14 zugeführt werden kann, da der als elektrohydraulischer Wandler 11" ausgeführte Stellwertgeber ebenso wie der Druckmeßumformer 12" auch nur simuliert und daher strichliniert dargestellt sind. Desweiteren ist strichzweipunktiert angedeutet, daß - wie weiter oben beschrieben - als Drehzahlsollwert auch die Stellgröße eines Sollwertgebers 8A eines nicht dargestellten, vorgelagerten Regelkreises verwendet werden kann.

## Patentansprüche

1. Verfahren zur redundanten Regelung von Drehzahlen od. dgl., insbesondere für dampf-, luft- oder gasdurchströmte Strömungsmaschinen, wie Dampfturbinen, Gasturbinen, Turbokompressoren od. dgl., mit mindestens drei parallel arbeitenden Steuer- und Regelkreisen, wobei die einzelnen Regelkreise unabhängig voneinander arbeiten und die einzelnen Stellgrößen einer Vergleicherschaltung zwecks Erkennung einer signifikanten Abweichung einer Stellgröße von den anderen Stellgrößen (Ausfall eines Regelkreises) zugeführt werden und wobei die Vergleicherschaltung dann diese falsche Stellgröße unterdrückt und mindestens eine der weiteren Stellgrößen der Steuerung zugrundelegt, dadurch gekennzeichnet, daß neben zwei für sich bekannten Regelkreisen ein dritter Regelkreis vorhanden ist, der mittels eines Simulationsrechners simuliert wird.

2. Verfahren nach Anspruch 1, dadurch gekennzeichnet, daß dem Simulationsrechner als Eingangsgrößen mindestens der Drehzahlistwert, der Drehzahlsollwert und die Stellung eines den Volumenstrom des Arbeitsmediums einer Strömungsmaschine verändernden Regelventils zugeführt werden.

3. Verfahren nach Anspruch 1 oder 2, dadurch gekennzeichnet, daß die Simulation des dritten Regelkreises in Echtzeit erfolgt.

4. Verfahren nach einem der Ansprüche 1 bis 3, dadurch gekennzeichnet, daß der Simulationsrechner gleichzeitig auch die Auswahlfunktion der Vergleicherschaltung übernimmt.

5. Verfahren nach einem der Ansprüche 1 bis 4, dadurch gekennzeichnet, daß die Vergleicherschaltung jede signifikante Abweichung eines Regelkreises meldet.

6. Verfahren nach einem der Ansprüche 1 bis 5, dadurch gekennzeichnet, daß die Vergleicherschaltung mittels eines Steuerbefehls ein Steuerelement ansteuert, welches das Steuermedium der nicht unterdrückten Stellgröße/n einem die Drehzahl od. dgl. beeinflussenden Stellantrieb zuführt.

7. Verfahren nach einem der Ansprüche 1 bis 6, dadurch gekennzeichnet, daß als Drehzahlsollwert die Stellgröße eines vorgelagerten Regelkreises benutzt wird.

8. Verfahren nach einem der Ansprüche 1 bis 6, bei dem die Drehzahlsollwertbildung in jedem Regelkreis mittels eines Sollwertpotentiometers od. dgl. erfolgt, dadurch gekennzeichnet, daß bei geringfügigen Abweichungen der einzelnen Stellgrößen eine Nachführung des bzw. der inaktiven Regelkreise/s erfolgt.

9. Verfahren nach Anspruch 8, dadurch gekennzeichnet, daß auch der Sollwert des von dem Simulationsrechner simulierten Regelkreises nachgeführt wird.

10. Verfahren nach Anspruch 8 oder 9, dadurch gekennzeichnet, daß zur Nachführung die Stellgrößen der Drehzahlregler verwendet werden und die Stellgrößen der Stellungsregler als Auswahl- und Umschaltkriterium für das Steuerelement dienen.

11. Verfahren nach einem der Ansprüche 1 bis 10, dadurch gekennzeichnet, daß sämtliche Wandlerelemente wie elektrohydraulische Wandler, Druckmeßumformer od. dgl. auf eine Langzeitdrift hin überwacht werden, so daß bei abgeglichenem Sollwert jeder unterhalb der Ansprechschwelle für die Ausfallmeldung liegende Druckunterschied als separate Alarmmeldung zur Überprüfung der Justierung des bzw. der Wandlerelemente/s angezeigt wird.

12. Vorrichtung zur Durchführung des Verfahrens nach einem der Ansprüche 1 bis 10, bei der jeder Regelkreis (7, 7', 7'') mindestens aus einem Drehzahlistwertfühler (6, 6', 6''), einem Drehzahlsollwertsteller (8, 8', 8''), einem Drehzahlregler (9, 9', 9'') und einem Stellungsregler (10, 10', 10'') sowie ggf. einem Stellungsistwertfühler (4), einem ein Regelventil (3) zur Regelung des Volumenstromes des der Strömungsmaschine (1) zugeführten Arbeitsmediums (D) ansteuernden Stellwertgeber und einem Druckmeßumformer (12) besteht, dadurch gekennzeichnet, daß zur Simulation des vorzugsweise dritten Regelkreises (7'') ein Simulationsrechner (15) vorgesehen ist.

13. Vorrichtung nach Anspruch 12, dadurch gekennzeichnet, daß zur Steuerung des Regelventils (3) ein Stellantrieb (5) und für alle Steuer- und Regelkreise (7, 7', 7'') ein gemeinsamer Stellungsistwertfühler (4) vorgesehen ist.

14. Vorrichtung nach Anspruch 12 oder 13, dadurch gekennzeichnet, daß zur Ansteuerung des Steuerelementes mindesten eine Vergleicherschaltung (14) vorgesehen ist.

15. Vorrichtung nach einem der Ansprüche 12 bis 14, dadurch gekennzeichnet, daß für alle Regelkreise (7, 7', 7'') nur eine Vergleicherschaltung (14), ein Steuerelement und ein Stellantrieb (5) vorgesehen sind.

16. Vorrichtung nach einem der Ansprüche 12 bis 15, dadurch gekennzeichnet, daß als Stellwertgeber ein elektrohydraulischer Wandler (11) vorgesehen ist.

17. Vorrichtung nach einem der Ansprüche 12 bis 15, dadurch gekennzeichnet, daß als Stellwertgeber ein elektro-pneumatischer Wandler vorgesehen ist.

18. Vorrichtung nach einem der Ansprüche 12 bis 17, dadurch gekennzeichnet, daß in Fließrichtung des Steuermediums hinter dem elektrohydraulischen (11) bzw. elektropneumatischen Wandler als Steuerelement ein Ventil, vorzugsweise ein Magnetventil (13) vorgesehen ist.

7